# EUROPÄISCHE PATENTSCHRIFT

(11) **EP 0 787 617 B1**
(45) Veröffentlichungstag und Bekanntmachung des Hinweises auf die Patenterteilung: **02.11.2000**
(21) Anmeldenummer: 96110114.4
(22) Anmeldetag: 22.06.1996
(51) Int. Cl.: B60K 26/02, G05G 1/14

(54) **Fahrpedaleinheit für Fahrzeuge**
Accelerator pedal unit for vehicles
Ensemble de pédale d'accélération pour véhicules

(30) Priorität: 29.08.1995 DE 19531733
(43) Veröffentlichungstag der Anmeldung: 06.08.1997
(73) Patentinhaber: DaimlerChrysler AG, 70567 Stuttgart (DE)
(72) Erfinder: Papenhagen, Dieter, 71334 Waiblingen (DE); Löchle, Manfred, 70329 Stuttgart (DE); Meyer, Thorsten, 70736 Fellbach (DE)

(56) Entgegenhaltungen:
- EP-A- 0 430 600
- WO-A-94/29584
- DE-A- 2 815 769
- DE-A- 4 230 150
- DE-U- 9 409 892

## Beschreibung

Die Erfindung betrifft eine Fahrpedaleinheit für Fahrzeuge nach der im Oberbegriff von Anspruch 1 näher definierten Art.

Eine gattungsgemäße Fahrpedaleinheit ist aus der WO 94/29584 A1 bekannt. Bei dieser Fahrpedaleinheit ist benachbart zum Lagerauge des Pedalhebels zur Bildung einer Lagerstelle eine Lagerhülse eingesetzt, wobei die Lagerhülse zwischen zwei mit Lagerbohrungen versehenen Schenkeln eines Halters eingesetzt ist, welcher eine U-Form aufweist.

Fahrpedaleinheiten sind auch aus der DE-OS 28 15 769 bzw. der DE-OS 27 28 787 bekannt. Aus der EP 0 430 600 B1 ist ebenfalls eine Fahrpedaleinheit für Fahrzeuge mit einem Pedal und einem damit verbundenen Pedalhebel bekannt. Eine spiralförmige Rückstellfeder wirkt dabei auf den Pedalhebel, um diesen in Leerlaufstellung zu bringen. Die bekannten Fahrpedalhebel sind an einer Halterung in einer Fahrzeugwand befestigt.

Die bekannten Fahrpedaleinheiten sind jedoch relativ kompliziert mit einer Vielzahl von Bauteilen aufgebaut. Die Fahrpedaleinheit muß bei dem Zusammenbau des Fahrzeuges entsprechend aus mehreren Einzelteilen zusammenmontiert werden.

Der vorliegenden Erfindung liegt daher die Aufgabe zugrunde, die eingangs erwähnten Nachteile des Standes der Technik zu vermeiden, insbesondere eine Fahrpedaleinheit zu schaffen, die für eine rationelle Serienfertigung, insbesondere auch für eine Vormontage, geeignet ist. Dabei soll nach Möglichkeit auch weitgehend die alte bekannte Kinematik übernehmbar sein und eine Eignung für eine elektronische bzw. elektrische Weiterleitung der Impulse an den Verbrennungsmotor statt einer Seilzugverbindung gegeben sein.

Erfindungsgemäß wird diese Aufgabe durch die im kennzeichnenden Teil von Anspruch 1 genannten Merkmale gelöst.

Durch den beschriebenen modularen Aufbau mit einem Pedal, einem Pedalhebel und deren gemeinsame Lagerung in einem Halter, wobei auch ein oder mehrere erforderliche Rückzugsfedern in diese Einheit integriert werden können, ist eine einfache Vormontage der gesamten Fahrpedaleinheit möglich, insbesondere durch die erfindungsgemäß vorgesehenen und montierten Bauteile.

Hiernach ist es lediglich erforderlich, den Halter an einer vorbestimmten Stelle im Fahrzeug, was im allgemeinen die Spritzwand ist, zu befestigen. Mit dieser Befestigung ist die gesamte Fahrpedaleinheit funktionsfähig. Dabei kann auch grundsätzlich die gleiche Fahrpedaleinheit sowohl für einen Motor mit einem Schaltgetriebe als auch für ein Automatikgetriebe vorgesehen werden. Anstelle eines einfachen Endanschlages für ein Schaltgetriebe, der in dem Halter vorgesehen werden kann, ist bei einem Automatikgetriebe an dieser Stelle ein Kick-down-Schalter montierbar.

Vorteilhafte Weiterbildungen und Ausgestaltungen der Erfindung ergeben sich aus den Unteransprüchen und aus dem prinzipmäßig nachfolgend anhand der Zeichnung beschriebenen Ausführungsbeispiel.

Es zeigt:

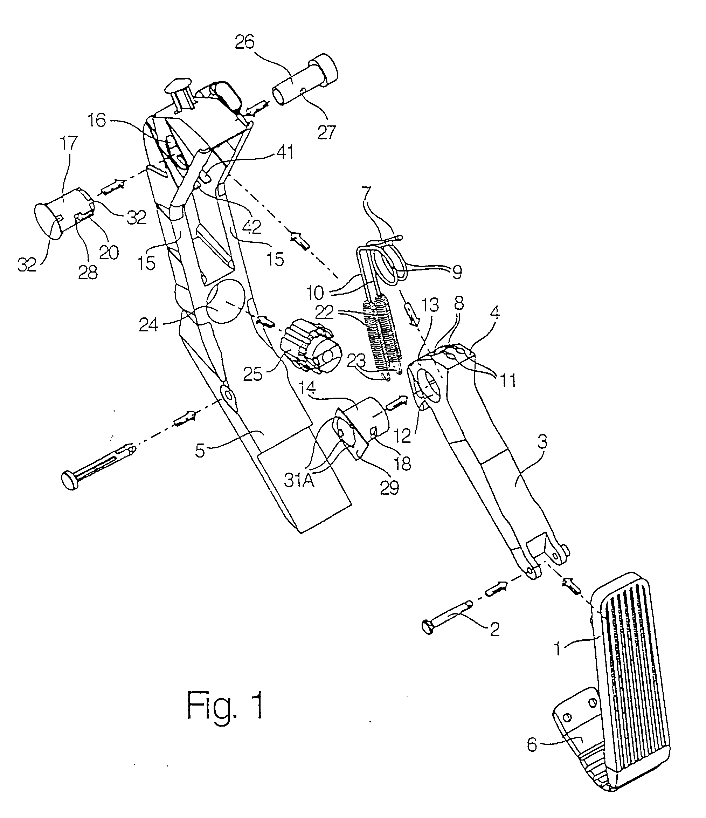

- Fig. 1: die erfindungsgemäße Fahrpedaleinheit in einer Explosionsdarstellung;
- Fig. 2: eine Seitenansicht der Fahrpedaleinheit nach der Fig. 1, teilweise im Schnitt; und

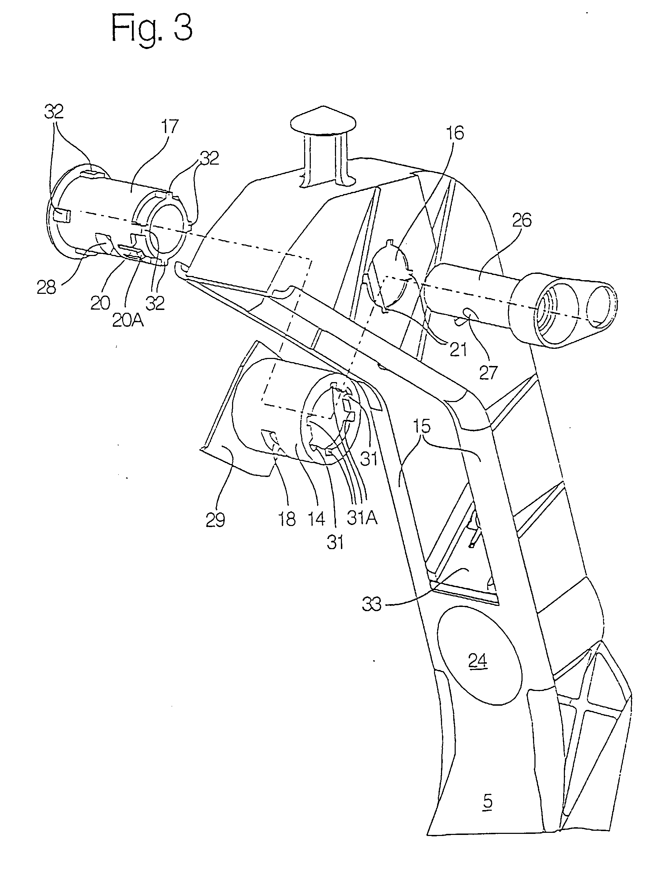

- Fig. 3: eine vergrößerte perspektivische Darstellung des Halters und der Verbindungsteile vor der Verbindung mit dem Pedalhebel.

Ein Pedal 1 ist in bekannter Weise über eine Steckverbindung 2 mit einem Pedalhebel 3 verbunden. Der Pedalhebel 3 ist über ein Lagerauge 4 auf der von der Steckverbindung 2 abgewandten Seite schwenkbar mit einem Halter 5 verbunden. Auf der von der Lagerstelle des Halters 5 abgewandten Seite kann das Pedal 1 noch über ein gelenkiges Verbindungsteil 6 mit dem Halter 5 verbunden sein. In einem Teilbereich der äußeren Umfangswand des Lagerauges 4 sind zwei parallel nebeneinander angeordnete Teilumfangsschlitze 8 angeordnet. Durch die Teilumfangsschlitze 8 werden Schlingen bzw. Schlaufen 9 von Seilzügen 10 geschoben. Die Enden der Seilzüge 10, die mit Nippeln 7 versehen sind, werden in entsprechend angepaßte Aussparungen 11 des Lagerauges 4 eingesetzt. Das Lagerauge 4 ist auf seiner inneren Umfangswand bzw. in der Bohrung mit zwei Umfangsnuten 12 versehen, die teilweise mit den Teilumfangsschlitzen 8 fluchten. In die Umfangsnuten 12 werden die beiden Schlaufen 9 der beiden Seilzüge 10, die von außen her durch die Teilumfangsschlitze 8 eingeschoben wurden, eingelegt. Die beiden wieder aus den Teilumfangsschlitzen 8 herausgeführten Teile der beiden Seilzüge 10 werden in Rillen über einen rückwärtigen Teil des Lagerauges 4 geführt, der in Form eines Nokkens 13 ausgebildet ist.

Nach dem Einlegen der Seilzüge 10 in die innere Umfangsnut 12 wird in die Bohrung des Lagerauges 4 eine feststehende Lagerhülse 14 eingeschoben. Die Lagerhülse 14 wirkt als eine Art Reibbuchse zwischen den eingelegten Seilschlaufen 9 und der inneren Umfangswand des Lagerauges 4. Die Lagerhülse 14 besitzt eine axiale Länge, die etwas größer ist als die Breite des Lagerauges 4. Auf diese Weise wird sie unter einer Klemmwirkung und damit spielfrei zwischen zwei Schenkeln 15 des wenigstens über einen Teilbereich im Querschnitt eine U-Form aufweisenden Halters 5 geklemmt. Durch sich gegenüberliegende Lagerbohrungen 16 in den Schenkeln 15 und durch die Lagerhülse 14 wird zur Montage eine Gleitbuchse 17 geschoben.

Für eine genaue Positionierung eines Fensters 18 in der Lagerhülse 14, durch das ein Mitnahmestift 19 gesteckt ist, ist die Lagerhülse 14 auf einer Stirnseite mit einer rahmenartigen Erweiterung 29 versehen, damit bei der Montage der Lagerhülse 14 nebst Pedalhebel 3 das Fenster 18 die für die Montage des Mitnahmestiftes 19 geeignete Position erhält.

Damit die gewünschte Position beibehalten und eine geforderte Zuordnung eingehalten wird, ist die Gleitbuchse 17 auf ihrem Umfang mit aus dieser herausragenden Lappen 20 und Nasen 32 versehen, wobei die Lappen 20 an ihren vorderen Enden mit Rastnasen 20A versehen sind. An die Größen der Nasen 32 angepaßte Aussparungen 21 und 31A befinden sich in den Lagerbohrungen 16 und in der inneren Umfangswand der Lagerhülse 14. Wird für eine Verbindung des Pedalhebels 3 mit dem Halter 5 die Gleitbuchse 17 eingeschoben, so kann dies nur in einer bestimmten Position erfolgen, wobei die Lappen 20 in die entsprechenden, asymmetrisch angeordneten Nuten 31 der Lagerhülse 14 in Form von Rastverschlüssen einrasten. Im montierten Zustand kommen die Nasen 32 in den Aussparungen 31A der Lagerhülse 14 und in den Aussparungen 21 der Lagerbohrung 16 zum Ruhen. Auf diese Weise sind sowohl die Lagerhülse 14 als auch die Gleitbuchse 17 drehfest mit dem Halter 5 verbunden.

Die von den Enden mit den Nippeln 7 abgewandten Enden der Seilzüge 10 sind mit Rückzugsfedern 22, die spiralförmig ausgebildet sind, verbunden. Die Rückzugsfedern 22 sind mit Haken 23 in beliebiger Weise unter einer entsprechenden Vorspannung in eine Querwand 33 des Halter 5 eingehängt.

In eine Bohrung 24 des Halters 5 wird bei einem Automatikfahrzeug ein Kick-down-Schalter 25 eingesetzt.

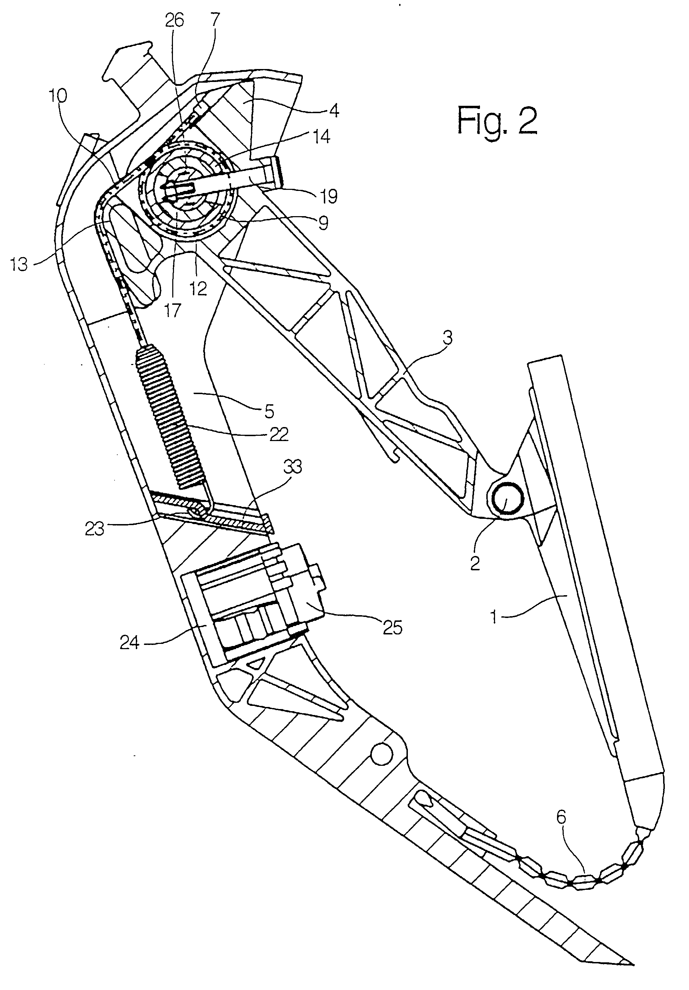

Wie aus der Fig. 2 ersichtlich ist, ist die Fahrpedaleinheit nach dem Ausführungsbeispiel für eine elektronische bzw. elektrische Verbindung mit dem Fahrzeug vorgesehen. Zu diesem Zweck wird in die Gleitbuchse 17 auf der von der Einschubseite der Gleitbuchse 17 abgewandten Seite aus eine Geberwelle 26 eingeschoben. Die Geberwelle 26 kann mit einem Ringmagnet versehen sein und in bekannter Weise durch eine entsprechende Verdrehung die jeweilige Stellung des Pedales 1 elektrisch bzw. elektronisch an den Fahrzeugmotor weitermelden. Die Geberwelle 26 kann als Potentiometerantriebswelle oder auch als Hallgeberantriebswelle in bekannter Weise ausgebildet sein.

Zur Verbindung mit dem Pedalhebel 3 dient der Mitnahmestift 19, der z.B. als Raststift oder als Gewindestift ausgebildet sein kann, welcher entsprechend in die Geberwelle 26 einrastet oder in eine entsprechende Gewindebohrung 27 in der Umfangswand der Geberwelle 26 eingeschraubt wird. Das andere Ende des Mitnahmestiftes 19 ist in einer Bohrung des Pedalhebels 3 fest angeordnet. Zur Durchführung des Mitnahmestiftes 19 und damit zur drehfesten Verbindung mit dem Pedalhebel 3 muß selbstverständlich auch die Gleitbuchse 17 mit einem Fenster 28 versehen sein, das mit dem Fenster 18 in der Lagerhülse 14 fluchtet.

Die beiden Rückzugsfedern 22 wirken in Verbindung mit den Seilzügen 10 als eine Art Seilbremse und geben damit dem Fahrer beim Gasgeben ein entsprechendes Fahrgefühl.

Die Größe der beiden Fenster 18 und 28 ist so zu wählen, daß sich der Mitnahmestift 19 und damit der Pedalhebel 3 frei zwischen einem oberen Anschlag, der den Leerlaufanschlag darstellt, und einem unteren Anschlag, der den Vollastanschlag darstellt, bewegen kann.

Die Gleitbuchse 17 hat eine Doppelfunktion, nämlich für die Lagerhülse 14 dient sie als Montage- und Verschlußbuchse und für die Geberwelle 26 als Gleitbuchse. Die Gleitbuchse 17 hält die Lagerhülse 14 drehmomentfest und sichert sie gegen ein Herausziehen.

Mit 36 und 37 sind Montagehaken am Pedalhebel 3 bzw. Halter 5 bezeichnet, deren Funktion hier nicht näher beschrieben wird.

Wie ersichtlich werden Pedalhebel 3 und Halter 5 als vormontierte Einheit auf einfache Weise durch Rastverschlüsse bzw. klipsartig über die Lagerhülse 14 und die Gleitbuchse 17 miteinander verbunden, wobei dabei auch die beiden Seilzüge 10 mit ihren Rückzugsfedern 22 bereits ebenfalls in die Einheit integriert sind. Dies bedeutet, es ist lediglich noch erforderlich, an geeigneten Stellen den Halter 5 mit dem Fahrzeug, z.B. an der Spritzwand, zu verbinden.

Die beschriebene Erfindung ist nicht auf das vorliegende Ausführungsbeispiel beschränkt. So kann der Halter 5 beispielsweise auch mit einem hängenden Fahrpedal, also einem Fahrpedal ohne untere Verbindung zum Fahrzeugboden bzw. zum Halter 5, verbunden sein.

## Patentansprüche

1. Fahrpedaleinheit für Fahrzeuge mit einem an einem Pedalhebel (3) befestigten Pedal (1), wobei der Pedalhebel (3) auf der von dem Pedal (1) abgewandten Seite über ein Lagerauge (4) drehbar in Lagerbohrungen (16) gelagert ist, und wobei wenigstens eine auf den Pedalhebel (3) einwirkende Rückzugsfeder (22) vorgesehen ist, wobei in das Lagerauge (4) des Pedalhebels (3) zur Bildung einer Lagerstelle eine Lagerhülse (14) eingesetzt ist, und mit einem modularen Aufbau, wobei die Lagerhülse (14) zwischen zwei mit den Lagerbohrungen (16) versehene Schenkel (15) eines Halters (5) eingesetzt ist, der wenigstens über einen Teilbereich im Querschnitt eine U-Form aufweist,
**dadurch gekennzeichnet,** daß
a) eine Gleitbuchse (17) durch die Lagerbohrungen (16) und durch die Lagerhülse (14) gesteckt ist,
b) zur Positionierung und zur Verbindung von Pedalhebel (3) und Halter (5) Gleitbuchse (17) und Lagerhülse (14) durch Rastverschlüsse (20,31) verbunden sind.

2. Fahrpedaleinheit nach Anspruch 1,
**dadurch gekennzeichnet,** daß die Rastverschlüsse elastische Lappen (20) aufweisen, die aus der Umfangswand der Gleitbuche (17) ragen, wobei die Lappen (20) in daran angepaßte, in der inneren Umfangswand der Lagerhülse (14) angeordnete Nuten (31) einrasten.

3. Fahrpedaleinheit nach Anspruch 2,
**dadurch gekennzeichnet,** daß in wenigstens einer der Lagerbohrungen (16) des Halters (5) zur genauen Positionierung der Gleitbuchse (17) Aussparungen (21) angeordnet sind, die an die Nasen (32) angepaßt sind.

4. Fahrpedaleinheit nach einem der Ansprüche 1 bis 3,
**dadurch gekennzeichnet,** daß die Lagerhülse (14) mit Klemmung zwischen die beiden Schenkel (15) des Halters (5) eingesetzt ist.

5. Fahrpedaleinheit nach einem der Ansprüche 1 bis 4,
**dadurch gekennzeichnet,** daß die Lagerhülse (14) und die Gleitbuche (17) am Umfang mit Fenstern (18,28) versehen sind, die miteinander fluchten, daß in die Gleitbuchse (17) eine Geberwelle (26) mit elektrische Signale erzeugenden Gliedern für die Elektronik des Fahrzeuges eingesetzt ist, und daß die Geberwelle (26) über einen durch die Fenster (18,28) ragenden Mitnahmestift (19) mit dem Pedalhebel (3) verbunden ist.

## Claims

1. An accelerator pedal unit for vehicles, with the pedal (1) fixed on a pedal lever (3), the pedal lever (3) being, on the side remote from the pedal (1), mounted in bearing bores (16) to be rotatable by means of a bearing boss (4) and in which at least one restoring spring (22) is provided which acts on the pedal lever (3), wherein a bearing sleeve (14) is inserted into the bearing boss (4) of the pedal lever (3) in order to form a bearing, and with a modular construction, the bearing sleeve (14) being inserted between two arms (15) of a holder (5) which are provided with the bearing bores (16), the said holder (5) having a U-shaped cross-section over at least a part of it, characterised in that
a) a bearing sleeve (14) is inserted into the bearing boss (4)of the pedal lever (3) to form a bearing,
b) the bearing sleeve (14) is inserted between two arms (15) of a holder (5) which is provided with the bearing bores (16), and which, over a portion, has a U-shaped cross-section.

2. An accelerator pedal unit according to claim 1, characterised in that the catch fasteners comprise flexible lugs (2) which project on the peripheral wall of the bush (17), the lugs (20) engaging matching grooves (31) disposed in the inner peripheral wall of the bearing sleeve (14).

3. An accelerator pedal unit according to claim 2, characterised in that in at least one of the bearing bores (16) in the holder (5) there are, for accurate positioning of the bush (17), recesses (21) which match the projections (32).

4. An accelerator pedal unit according to one of claims 1 to 3, characterised in that the bearing sleeve (14) is inserted with a clamping fit between the two arms (15) of the holder (5).

5. An accelerator pedal unit according to one of claims 1 to 4, characterised in that the bearing sleeve (14) and the bush (17) are provided on the periphery with windows (18, 28) which are aligned with one another and in that inserted into the bush (17) is a transmitting shaft (26) with, for the electronics of the vehicle, members which generate electrical signals and in that the transmitter shaft (26) is connected to the pedal lever (3) by a drive pin (19) projecting through the windows (18, 28).

## Revendications

1. Ensemble de pédale d'accélérateur pour véhicules, avec une pédale (1) fixée sur un levier de pédale (3), le levier de pédale (3) étant monté à rotation dans des perçages de tourillonnement (16), sur le côté opposé à la pédale (1), par l'intermédiaire d'un oeillet de tourillonnement (4), et au moins un ressort de rappel (22), agissant sur le levier de pédale (3), étant prévu, une douille de tourillonnement (14) étant insérée dans l'oeillet de tourillonnement (4) du levier de pédale (3), pour constituer un point de tourillonnement, et avec une structure modulaire, la douille de tourillonnement (14) étant insérée entre deux branches (15), dotées des perçages de tourillonnement (16), d'un support (5), présentant au moins une section transversale en forme de U sur une zone partielle,
caractérisé en ce que
a) une douille de glissement (17) est enfichée dans les perçages de tourillonnement (16) et dans la douille de tourillonnement (14),
b) une douille de glissement (17) et une douille de tourillonnement (14) sont reliées par des fermetures à encliquetage (20, 31), pour assurer le positionnement et la liaison entre le levier de pédale (3) et le support (5) .

2. Ensemble de pédale d'accélérateur selon la revendication 1, caractérisé en ce que les fermetures à encliquetage présentent des languettes (20) élastiques faisant saillie de la paroi périphérique de la douille de glissement (17), les languettes (20) s'encliquetant dans des gorges (31) leur étant adaptées, ménagées dans la paroi périphérique intérieure de la douille de tourillonnement (14).

3. Ensemble de pédale d'accélérateur selon la revendication 2, caractérisé en ce que, en au moins l'un des perçages de tourillonnement (16) du support (5), sont disposés des évidements (21), adaptés aux ergots (32) pour assurer le positionnement précis de la douille de glissement (17).

4. Ensemble de pédale d'accélérateur selon la revendication 1 à 3, caractérisé en ce que la douille de tourillonnement (14) est insérée avec serrage entre les deux branches (15) du support (5).

5. Ensemble de pédale d'accélérateur selon l'une des revendications 1 à 4, caractérisé en ce que la douille de tourillonnement (14) et la douille de glissement (17) sont munies en périphérie de fenêtres (18, 28), alignées l'une par rapport à l'autre, en ce que dans la douille de glissement (17) est inséré un arbre de transducteur (26) muni d'organes générant des signaux électriques, pour l'électronique du véhicule, et en ce que l'arbre de transducteur (26) est relié au levier de pédale (3), par l'intermédiaire d'une tige d'entraînement (19) pénétrant à travers les fenêtres (18, 28).
